# EUROPÄISCHE PATENTANMELDUNG

(11) **EP 0 788 953 A2**
(43) Veröffentlichungstag der Anmeldung: **13.08.1997**
(21) Anmeldenummer: 96115108.1
(22) Anmeldetag: 20.09.1996
(51) Int. Cl.: B60T 1/06, F16D 65/84

(54) **Antriebsstrang mit einem Motor, einem Getriebe, einer Kupplung und einer Bremse**

(30) Priorität: 28.09.1995 DE 19536096
(71) Anmelder: Voith Turbo GmbH & Co. KG, 89522 Heidenheim (DE)
(72) Erfinder: Heilinger, Peter, 74564 Crailsheim (DE)
(74) Vertreter: Weitzel, Wolfgang, Dr.-Ing. Patentanwalt

(57) **Zusammenfassung**

Die Erfindung betrifft einen Antriebsstrang mit einem Motor, der einen Kurbelwellenzapfen (1) aufweist;
auf dem Kurbelwellenzapfen bzw. auf einer diesen verlängernden Adapterwelle (2) ist eine Bremse (4,4.1,4.4) drehfest montiert;
die Bremse ist eine Reibbremse.

## Beschreibung

Die Erfindung betrifft einen Antriebsstrang gemäß dem Oberbegriff von Anspruch 1.

Antriebsstränge dieser Art sind in großer Zahl bekanntgeworden. Nur beispielshalber wird auf DE 195 01 853.2 verwiesen.

Für solche Antriebsstränge gibt es Bremssysteme der unterschiedlichsten Art. Ein wichtiger Typus eines Bremssystems ist in US 5 358 077 beschrieben. Dieses Bremssystem umfaßt eine Bremsscheibe, die von einer Nabe getragen ist. Die Nabe weist einen Kanal zum Zuführen und einen Kanal zum Abführen eines Kühlmittels auf. Die Bremsscheibe ist mit einer Vielzahl von radial angeordneten Ausnehmungen versehen, den sogenannten Kühlzellen. In jeder Kühlzelle befindet sich ein Röhrchen, das sich gleich der Kühlzelle in radialer Richtung erstreckt. Die einzelnen Röhrchen sind mit ihren radial inneren Enden an den Zufuhrkanal angeschlossen, während sie mit ihrem radial äußeren Bereich mit der Kühlzelle in leitender Verbindung stehen. Die Kühlzellen wiederum sind mit ihren radial inneren Bereichen an den Abfuhrkanal angeschlossen. Der Zufuhrkanal der Nabe wird mit Kühlmittel beschickt. Dieses tritt in die radial inneren Enden der Röhrchen ein, strömt sodann durch Zentrifugalkraft radial nach außen, mündet dort in die betreffenden Kühlzellen und fließt in den Kühlzellen wieder radial einwärts zurück, um zum Abfuhrkanal in der Nabe zu gelangen.

Gerade bei Antriebssträngen, die eine hohe Leistung übertragen müssen, ist es wichtig, ein effizientes Bremssystem zu verwenden, das hohe, beim Bremsen anfallende Warmemengen abführen kann, und das demgemäß eine hohe Bremsleistung entwickeln kann. Dieses Erfordernis ist besonders dann wichtig, wenn es sich um ein Bremssystem für ein Kraftfahrzeug handelt, insbesondere für ein Nutzfahrzeug von hohem Transportgewicht.

Außerdem müssen Kraftfahrzeuge bekanntlich nicht nur mit einem bei Fahrt wirkenden effizienten Bremssystem ausgestattet sein, sondern auch mit einer Bremse für den geparkten Zustand des Fahrzeuges.

Der Erfindung liegt die Aufgabe zugrunde, einen Antriebsstrang gemäß dem Oberbegriff von Anspruch 1 zu schaffen, bei dem die einzelnen Bauteile in optimaler Weise einander zugeordnet sind. Insbesondere sollen der Bauaufwand verringert, der Raumbedarf verkleinert und die Zugänglichkeit verbessert werden.

Diese Aufgabe wird durch die kennzeichnenden Merkmale von Anspruch 1 gelöst.

Durch die erfindungsgemäße Ausbildung gelingt es, das Bauvolumen auf ein Mindestmaß zu beschränken und eine besonders kompakte Konstruktion zu erzielen.

Die Erfindung ist anhand der Zeichnung näher erläutert. Ein Kurbelwellenzapfen 1 ist in einem Kurbelgehäuse 1.1 unter Zwischenfügung einer Ringdichtung 1.2 gelagert. Eine Adapterwelle 2 ist mittels einer Anzahl von konzentrisch angeordneten Schrauben 2.1 am Kurbelwellenzapfen 1 befestigt. Die Adapterwelle ihrerseits trägt die folgenden Elemente: einen Schwingungsdämpfer 3, eine flüssigkeitsgekühlte Bremsscheibe 4, eine Keilriemenscheibe 5 sowie eine Klemmscheibe 6, die mittels einer einzigen zentralen Schraube 7 an der Adapterwelle 2 angeklemmt ist. Der Bremsscheibe 4 ist ein Bremssattel 4.1 zugeordnet. Dieser ist, wie man sieht, im Querschnitt U-förmig und weist zwei Schenkel 4.2, 4.3 auf. Zwischen dem Außenumfang der Bremsscheibe 4 und den beiden Schenkeln 4.2, 4.3 befinden sich Reibbeläge 4.4. Die beiden Schenkel 4.2, 4.3 sind zangenartig gegen die Stirnflächen der Bremsscheibe 4 in deren Umfangsbereich anpreßbar, um eine Bremswirkung zu erzielen.

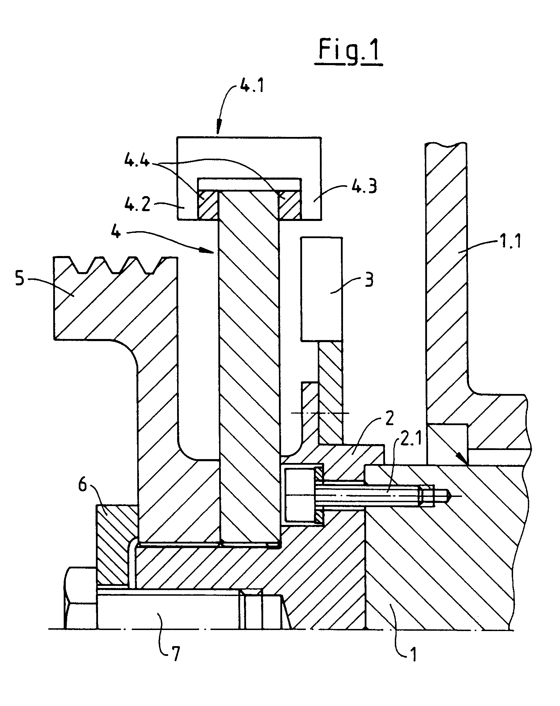

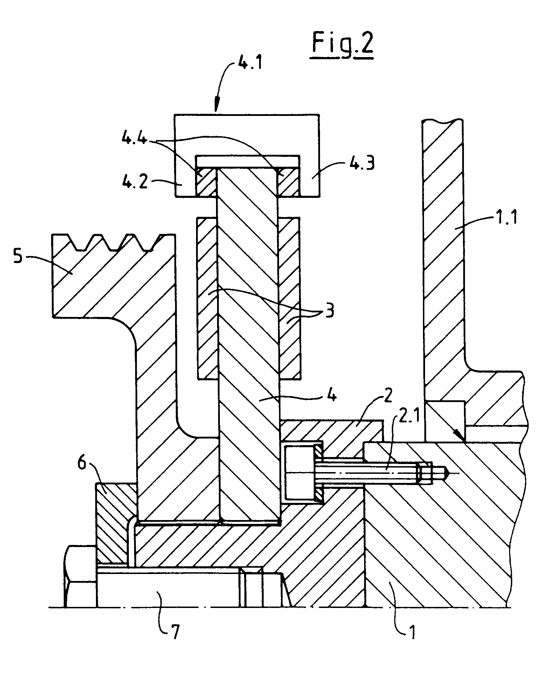

Der Antriebsstrang gemäß Figur 2 ist ganz ähnlich aufgebaut wie jener gemäß Figur 1. Jedoch ist Schwingungsdämpfer 3 in Gestalt von zwei ringförmigen Elementen auf die beiden Stirnseiten der Bremsscheibe 4 aufgebracht. Dies ergibt eine gegenüber Figur 1 kompaktere Konstruktion. Alle übrigen Elemente können den entsprechenden Elementen von Figur 1 gleich oder ähnlich sein.

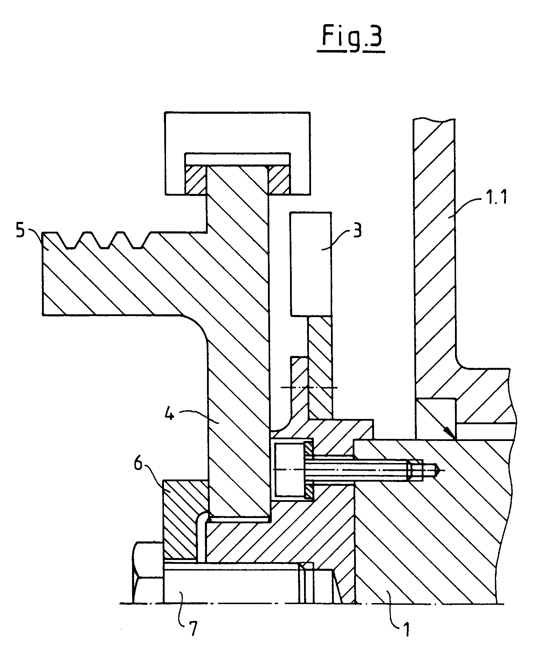

Bei der Ausführungsform gemäß Figur 3 sind Keilriemenscheibe und Bremse zu einem einzigen Bauteil vereinigt. Man erkennt die Bremsscheibe 4, der eine Keilriementrommel 5 angeformt ist. Im übrigen ist dieser Antriebsstrang gleich oder ähnlich aufgebaut wie jener gemäß Figur 1.

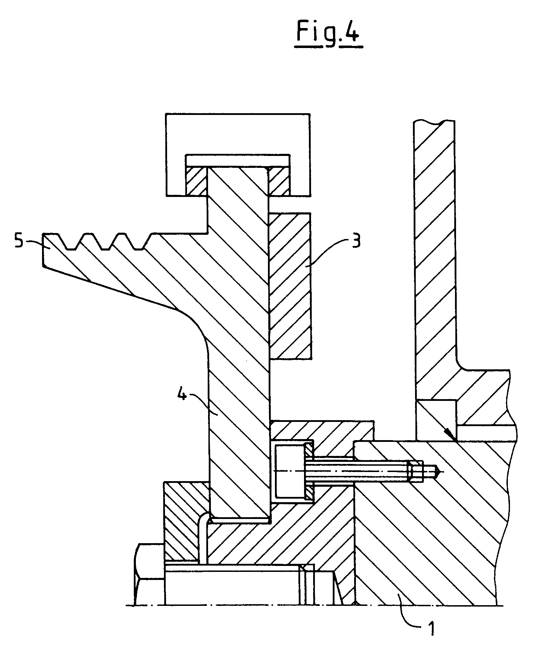

Die Ausführungsform gemäß Figur 4 ist ganz besonders kompakt. Hierbei sind wiederum Bremsscheibe 4 und Keilriementrommel 5 baulich vereinigt, so wie bei der Ausführungsform gemäß Figur 3. Außerdem ist das Dämpferelement 3 als Ring ausgebildet und unmittelbar an einer Stirnfläche von Bremsscheibe 4 befestigt.

Durch die erfindungsgemäße Wahl einer Reibbremse wird ein Bremssystem geschaffen, das sowohl bei Fahrt als auch im geparkten Zustand wirksam sein kann. Wird das Fahrzeug beispielsweise auf abschüssiger Straße geparkt, so vermag die Bremse aufgrund des Ortes ihrer Anordnung bei eingelegtem - vor allem kleineren - Gang ein besonders hohes Bremsmoment auf die Räder zu übertragen.

Ist die Bremsscheibe 4 flüssigkeitsgekühlt, so wie gemäß einem besonderen Gedanken der Erfindung vorgesehen, so ist der gewählte Ort ihrer Anordnung auf dem Kurbelwellenzapfen bzw. auf einer Adapterwelle besonders günstig im Hinblick auf die Zufuhr und Abfuhr des flüssigen Kühlmittels.

## Patentansprüche

1. Antriebsstrang
1.1 mit einem Motor, der einen Kurbelwellenzapfen (1) aufweist;
1.2 auf dem Kurbelwellenzapfen bzw. auf einer diesen verlängernden Adapterwelle (2) ist eine Bremse (4) drehfest montiert;
1.3 die Bremse (4) ist eine Reibbremse.

2. Antriebsstrang nach Anspruch 1, dadurch gekennzeichnet, daß die Bremse eine Reibbremse in Scheibenbauweise ist (Bremsscheibe).

3. Antriebsstrang nach Anspruch 2, gekennzeichnet durch die folgenden Merkmale:
3.1 die Bremsscheibe (4) ist flüssigkeitsgekühlt;
3.2 die Bremsscheibe (4) weist Zentrifugalkanäle auf, mit denen eine Kühlflüssigkeit radial nach außen geleitet wird;
3.3 die Bremsscheibe (4) weist Zentripetalkanäle auf, mit denen die Flüssigkeit radial nach innen geleitet wird.

4. Antriebsstrang nach einem der Ansprüche 1 bis 3, dadurch gekennzeichnet, daß auf dem Kurbelwellenzapfen bzw. auf der Adapterwelle (2) ein Schwingungsdämpfer (3), die Bremsscheibe (4) sowie eine Keilriementrommel (5) axial nebeneinander angeordnet sind.

5. Antriebsstrang nach Anspruch 4, dadurch gekennzeichnet, daß Schwingungsdämpfer (3), Bremsscheibe (4) und Keilriementrommel (5) auf dem Kurbelwellenzapfen (1) bzw. auf der Adapterwelle (2) fliegend gelagert sind.

6. Antriebsstrang nach Anspruch 4 oder 5, dadurch gekennzeichnet, daß die genannten Elemente, vom Kurbelwellenzapfen (1) ausgehend, in der Reihenfolge: Schwingungsdämpfer (3), Bremsscheibe (4), Keilriementrommel (5), angeordnet sind.

7. Antriebsstrang nach einem der Ansprüche 4 bis 6, dadurch gekennzeichnet, daß der Schwingungsdämpfer (3) und die Bremsscheibe (4) baulich vereinigt sind.

8. Antriebsstrang nach einem der Ansprüche 4 bis 7, dadurch gekennzeichnet, daß Bremsscheibe (4) und Keilriementrommel (5) baulich vereinigt sind.

9. Antriebsstrang nach einem der Ansprüche 4 bis 8, dadurch gekennzeichnet, daß Schwingungsdämpfer (3), Bremsscheibe (4) und Keilriementrommel (5) baulich vereinigt sind.
